# EUROPEAN PATENT APPLICATION

(11) **EP 4 517 906 A1**
(43) Date of publication of application: **05.03.2025**
(21) Application number: 22956051.1
(22) Date of filing: 25.08.2022
(51) Int. Cl.: H01M 10/058, H01M 10/0525, H01M 4/13, H01M 4/62, H01M 10/0566, H01M 10/36

(54) **SECONDARY BATTERY, AND PREPARATION METHOD THEREFOR AND ELECTRIC DEVICE COMPRISING SAME**

(71) Applicant: Contemporary Amperex Technology (Hong Kong) Limited, Hong Kong 999077 (HK)
(72) Inventor: YANG, Chenglong, Ningde, Fujian 352100 (CN); ZHANG, Haiming, Ningde, Fujian 352100 (CN); TANG, Daichun, Ningde, Fujian 352100 (CN); YU, Honggang, Ningde, Fujian 352100 (CN); GAO, Jingyu, Ningde, Fujian 352100 (CN); LIU, Xingxing, Ningde, Fujian 352100 (CN)
(74) Representative: Gong, Jinping
(86) International application number: PCT/CN2022/114750
(87) International publication number: WO 2024/040504

(57) **Abstract**

This application provides a secondary battery, including a negative electrode plate. The negative electrode plate includes a negative current collector and a negative film layer disposed on at least one surface of the negative current collector. The negative film layer contains a nitrate. The secondary battery of this application can avoid generation of lithium dendrites during cycling. This application further provides an electrical device containing the secondary battery.

## Description

### TECHNICAL FIELD

This application relates to the technical field of secondary batteries, and in particular, to a secondary battery, a method for preparing the secondary battery, a battery module containing the secondary battery, a battery pack containing the secondary battery, and an electrical device containing the secondary battery.

### BACKGROUND

**In** recent years, lithium-ion secondary batteries have been applied more extensively in many fields, including energy storage power systems such as hydro, thermal, wind, and solar power stations, and other fields such as electric tools, electric bicycles, electric motorcycles, and electric vehicles, military equipment, and aerospace. The significant development of the lithium-ion batteries gives rise to higher requirements on the cycle performance, safety performance, and the like of the batteries.

**In** a lithium-ion secondary battery, lithium is precipitated on an electrode after the battery has been charged and discharged for a plurality of cycles. The precipitated lithium may grow into lithium dendrites. The lithium dendrites may puncture the separator and cause thermal runaway of a battery cell, thereby shortening the cycle life of the battery and even impairing safety of the battery. Therefore, the growth of the lithium dendrites needs to be suppressed during cycling of the lithium-ion secondary batteries.

### SUMMARY

This application is developed in view of the above needs. An objective of this application is to provide a secondary battery to suppress formation of lithium dendrites of the secondary battery during cycling.

To achieve the above objective, a first aspect of this application provides a secondary battery, including a negative electrode plate. The negative electrode plate includes a negative current collector and a negative film layer disposed on at least one surface of the negative current collector. The negative film layer contains a nitrate.

In this way, this application can effectively suppress the growth of lithium dendrites in a lithium-ion secondary battery by adding the nitrate into the negative film layer of the battery.

In any embodiment, the nitrate is one or more selected from magnesium nitrate, copper nitrate, zinc nitrate, calcium nitrate, aluminum nitrate, silver nitrate, lithium nitrate, potassium nitrate, or sodium nitrate; optionally, the nitrate is one or more selected from magnesium nitrate, copper nitrate, zinc nitrate, calcium nitrate, or aluminum nitrate; and further optionally, the nitrate is one or more selected from magnesium nitrate, copper nitrate, or zinc nitrate; and still further optionally, the nitrate is magnesium nitrate.

By selecting an appropriate type of the nitrate, the effect of the nitrate on suppressing the growth of lithium dendrites can be further optimized.

In any embodiment, based on a total mass of the negative film layer, a mass percent of the nitrate in the negative film layer is 0.2 wt% or more, and optionally 0.2 wt% to 4.5 wt%, and further optionally 0.2 wt% to 1.5 wt%.

By selecting a mass percent of the nitrate, the effect of the nitrate on suppressing the growth of lithium dendrites can be further optimized.

In any embodiment, the negative film layer includes a negative active material, and the negative active material includes at least one of a carbon-based negative active material or a silicon-based negative active material.

In such a secondary battery, the lithium dendrites can be suppressed more significantly.

In any embodiment, the secondary battery includes an electrolyte solution, the electrolyte solution also contains a nitrate, and optionally, based on a total mass of the electrolyte solution, a mass percent of the nitrate in the electrolyte solution is 0.1 wt% or more.

The nitrate in the electrolyte solution can serve to suppress the formation of lithium dendrites.

A second aspect of this application further provides a method for preparing a secondary battery, including: preparing a negative electrode plate in the following step: coating at least one surface of a negative current collector with a slurry containing a negative active material and a nitrate.

The nitrate added in the negative film layer can effectively suppress the growth of lithium dendrites in the lithium-ion secondary battery.

In any embodiment, the nitrate is one or more selected from magnesium nitrate, copper nitrate, zinc nitrate, calcium nitrate, aluminum nitrate, silver nitrate, lithium nitrate, potassium nitrate, or sodium nitrate; optionally, the nitrate is one or more selected from magnesium nitrate, copper nitrate, zinc nitrate, calcium nitrate, or aluminum nitrate; and further optionally, the nitrate is one or more selected from magnesium nitrate, copper nitrate, or zinc nitrate; and still further optionally, the nitrate is magnesium nitrate.

By selecting an appropriate type of the nitrate, the effect of the nitrate on suppressing the growth of lithium dendrites can be further optimized.

In any embodiment, a mass percent of the nitrate is 0.5 wt% or more, and optionally 0.5 wt% to 5 wt%, and further optionally 0.5 wt% to 2 wt%, based on a dry weight of the slurry.

By controlling the mass percent of the nitrate added to the slurry, an appropriate content of the nitrate in the negative film layer and the electrolyte solution can be obtained.

In any embodiment, the negative active material includes a carbon-based negative active material and/or a silicon-based negative active material.

In such a secondary battery, the lithium dendrites can be suppressed more significantly.

A third aspect of this application provides an electrical device. The electrical device includes at least one of the secondary battery according to the first aspect of this application or a secondary battery prepared by the method for preparing a secondary battery according to the second aspect of this application.

### BRIEF DESCRIPTION OF DRAWINGS

FIG. 1 is a schematic diagram of a putative mechanism of a nitrate suppressing lithium dendrites;
FIG. 2 is a scanning electron microscope (SEM) image of a lithium plating region of a battery after cycling according to an embodiment and a comparative embodiment;
FIG. 3 is a close-up view of a separator observed with a charge-coupled device (CCD) at a corresponding position of a lithium plating region according to Comparative Embodiment 1 (A) and Embodiment 1 (B);
FIG. 4 is a schematic diagram of a secondary battery according to an embodiment of this application;
FIG. 5 is an exploded view of a secondary battery shown in FIG. 4 according to an embodiment of this application;
FIG. 6 is a schematic diagram of a battery module according to an embodiment of this application;
FIG. 7 is a schematic diagram of a battery pack according to an embodiment of this application;
FIG. 8 is an exploded view of the battery pack shown in FIG. 7 according to an embodiment of this application; and
FIG. 9 is a schematic diagram of an electrical device that uses a secondary battery as a power supply according to an embodiment of this application.

List of reference numerals:
1. battery pack; 2. upper box; 3. lower box; 4. battery module; 5. secondary battery; 51. housing; 52. electrode assembly; 53. top cap assembly.

### DETAILED DESCRIPTION OF EMBODIMENTS

The following describes and discloses in detail embodiments of a secondary battery, a battery module, a battery pack, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified herein, the term "or" is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

The inventor hereof finds that, in a lithium-ion secondary battery that uses a carbon-based material and/or a silicon-based material as a negative active material, lithium dendrites grow obviously in the battery that has been charged and discharged for a plurality of cycles. Because the solubility of a nitrate in an electrolyte solution is much limited, the nitrate added to the electrolyte solution fails to achieve a good effect of suppressing the growth of lithium dendrites.

A new method needs to be developed to suppress the growth of the lithium dendrites in the secondary battery.

In an embodiment of this application, this application discloses a secondary battery, including a negative electrode plate. The negative electrode plate includes a negative current collector and a negative film layer disposed on at least one surface of the negative current collector. The negative film layer contains a nitrate.

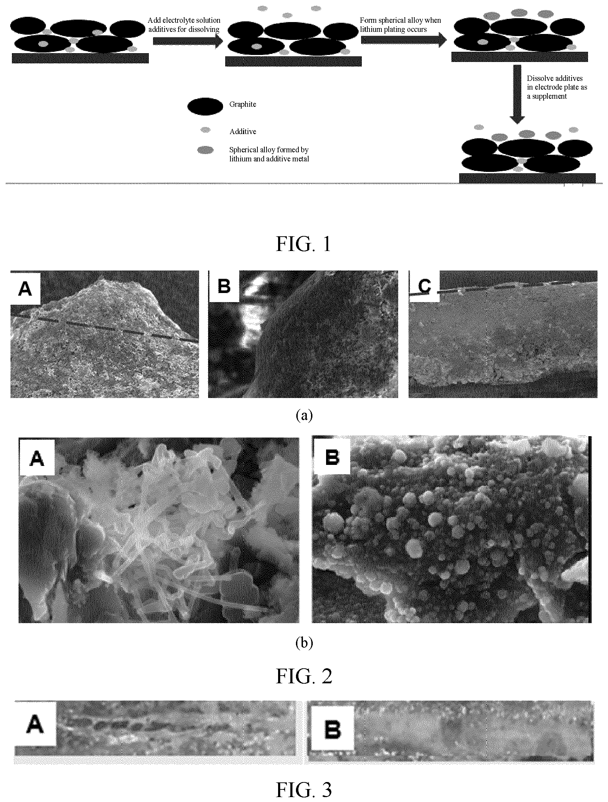

Although the underlying mechanism still remains unclear, the applicant hereof unexpectedly finds that, this application can effectively suppress the growth of lithium dendrites in a lithium-ion secondary battery by adding the nitrate into the negative film layer of the battery. After the battery is charged and discharged for a plurality of cycles, even if lithium plating occurs on an electrode, the lithium is substantially in a spherical state and will not grow into dendrites that can pierce the separator. Speculatively, one of the reasons why the present invention can effectively suppress the growth of lithium dendrites is that the nitrate contained in the negative electrode can gradually diffuse into the electrolyte solution during cycling of the battery, so that the electrolyte solution contains a sufficient amount of nitrate (for example, as shown in the schematic diagram in FIG. 1). Moreover, when lithium plating occurs, due to high reducibility of lithium, the metal element in the nitrate is reduced to form an alloy with lithium, thereby lowering a diffusion energy barrier, and in turn, suppressing the formation of lithium dendrites. In this application, although the metal element in the nitrate is reduced, the thickness of an SEI layer is still kept below 500 nm, thereby avoiding a significant increase in the impedance.

In some embodiments, the nitrate is one or more selected from magnesium nitrate, copper nitrate, zinc nitrate, calcium nitrate, aluminum nitrate, silver nitrate, lithium nitrate, potassium nitrate, or sodium nitrate; optionally, the nitrate is one or more selected from magnesium nitrate, copper nitrate, zinc nitrate, calcium nitrate, or aluminum nitrate; and further optionally, the nitrate is one or more selected from magnesium nitrate, copper nitrate, or zinc nitrate; and still further optionally, the nitrate is magnesium nitrate.

By selecting an appropriate type of the nitrate, the effect of the nitrate on suppressing the growth of lithium dendrites can be further optimized.

In some embodiments, based on a total mass of the negative film layer, a mass percent of the nitrate in the negative film layer is 0.2 wt% or more. For example, the mass percent of the nitrate may be 0.3 wt%, 0.4 wt%, 0.5 wt%, 0.6 wt%, 1.5 wt%, 3.5 wt%, or a value falling within a range formed by any two thereof. Optionally, the mass percent of the nitrate is 0.2 wt% to 4.5 wt%, and further optionally 0.2 wt% to 1.5 wt%.

By selecting a mass percent of the nitrate, the effect of the nitrate on suppressing the growth of lithium dendrites can be further optimized. If the mass percent is less than 0.2 wt%, the nitrate may be consumed quickly in some cases, thereby being unfavorable to the long-term cycling of the battery. If the mass percent is greater than 4.5 wt%, the nitrate takes up more of the weight of the negative film layer, thereby being unfavorable to increasing the energy density of the battery. An excessive mass percent of the nitrate may lead to stripping of the negative film layer.

In some embodiments, the negative film layer includes a negative active material. The negative active material includes at least one of a carbon-based negative active material or a silicon-based negative active material.

In such a secondary battery, the lithium dendrites can be suppressed more significantly.

Optionally, the negative active material includes a carbon-based negative active material. Optionally, the carbon-based negative active material includes at least one of: graphite, mesocarbon microbeads, soft carbon, or hard carbon.

The carbon-based negative active material is not particularly limited, and may be any conventional carbon-based negative active material known in the art. For example, the carbon-based negative active material may be a carbon-based negative active material with Dv₅₀ of 2 µm to 20 µm. Optionally, Dv₅₀ of hard carbon ranges from 2 µm to 10 µm, Dv₅₀ of graphite ranges from 10 µm to 20 µm, Dv₅₀ of soft carbon ranges from 5 µm to 20 µm, and Dv₅₀ of mesocarbon microbeads ranges from 10 µm to 20 µm.

In some embodiments, the secondary battery includes an electrolyte solution, the electrolyte solution also contains a nitrate. Optionally, based on a total mass of the electrolyte solution, a mass percent of the nitrate in the electrolyte solution is 0.1 wt% or more.

The nitrate in the electrolyte solution can serve to suppress the formation of lithium dendrites.

In some embodiments, the secondary battery is a lithium-ion secondary battery.

This application further provides a method for preparing a secondary battery, including: preparing a negative electrode plate in the following step:
coating at least one surface of a negative current collector with a slurry containing a negative active material and a nitrate.

As mentioned above, the nitrate added in the negative film layer of the secondary battery prepared by the foregoing method can effectively suppress the growth of lithium dendrites in the lithium-ion secondary battery. Moreover, the nitrate added to the slurry facilitates removal of crystallization water usually contained in the nitrate through a subsequent operation of drying the electrode plate.

In some embodiments, the mass percent of the nitrate is 0.5 wt% or more. For example, the mass percent of the nitrate may be 0.7 wt%, 1 wt%, 2 wt%, 4 wt%, 10 wt%, or a value falling within a range formed by any two thereof, based on a dry weight of the slurry. Optionally, the mass percent of the nitrate is 0.5 wt% to 5 wt%, and further optionally 0.5 wt% to 2 wt%, based on the dry weight of the slurry.

By controlling the mass percent of the nitrate added to the slurry, an appropriate content of the nitrate in the negative film layer and the electrolyte solution can be obtained.

The features and definitions defined above with respect to the secondary battery also apply to the preparation method. Other steps of the preparation method of the secondary battery may be conventional preparation steps in the art.

The following describes in detail other aspects of the secondary battery, a battery module, a battery pack, and an electrical device according to this application with due reference to drawings.

The secondary battery includes a positive electrode plate, a negative electrode plate, an electrolyte solution, and a separator. In a charge-and-discharge cycle of the battery, active ions are shuttled between the positive electrode plate and the negative electrode plate by intercalation and deintercalation. The electrolyte solution serves to conduct ions between the positive electrode plate and the negative electrode plate. Disposed between the positive electrode plate and the negative electrode plate, the separator primarily serves to prevent a short circuit between the positive electrode plate and the negative electrode plate while allowing passage of ions.

### [Positive electrode plate]

The positive electrode plate includes a positive current collector and a positive film layer that overlays at least one surface of the positive current collector. The positive film layer includes a positive active material.

As an example, the positive current collector includes two surfaces opposite to each other in a thickness direction of the positive current collector. The positive film layer is disposed on either or both of the two opposite surfaces of the positive current collector.

In some embodiments, the positive current collector may be a metal foil or a composite current collector. For example, the metal foil may be an aluminum foil. The composite current collector may include a polymer material substrate and a metal layer formed on at least one surface of the polymer material substrate. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

In some embodiments, the positive active material may be a positive active material that is well known for use in a battery in the art. As an example, the positive active material may include at least one of the following materials: olivine-structured lithium-containing phosphate, lithium transition metal oxide, and a modified compound thereof. However, this application is not limited to such materials, and other conventional materials usable as a positive active material of a battery may be used instead. Of such positive active materials, one may be used alone, or at least two may be used in combination. Examples of the lithium transition metal oxide may include, but without being limited to, at least one of lithium cobalt oxide (such as LiCoO₂), lithium nickel oxide (such as LiNiO₂), lithium manganese oxide (such as LiMnO₂ and LiMn₂O₄), lithium nickel cobalt oxide, lithium manganese cobalt oxide, lithium nickel manganese oxide, lithium nickel cobalt manganese oxide (such as LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}Co_{0.25}Mn_{0.25}O₂ (briefly referred to as NCM211), LiNi_{0.6}Co_{0.2}Mn_{0.2}O₂ (briefly referred to as NCM622), LiNi_{0.8}Co_{0.1}Mn_{0.1}O₂ (briefly referred to as NCM811)), lithium nickel cobalt aluminum oxide (such as LiNi_{0.85}Co_{0.15}Al_{0.05}O₂), or a modified compound thereof. Examples of the olivine-structured lithium-containing phosphate may include, but without being limited to, at least one of lithium iron phosphate (such as LiFePO₄ (briefly referred to as LFP)), a composite of lithium iron phosphate and carbon, lithium manganese phosphate (such as LiMnPO₄), a composite of lithium manganese phosphate and carbon, lithium manganese iron phosphate, or a composite of lithium manganese iron phosphate and carbon.

In some embodiments, the positive film layer further optionally includes a binder. As an example, the binder may include at least one of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive film layer further optionally includes a conductive agent. As an example, the conductive agent may include at least one of superconductive carbon, acetylene black, carbon black, Ketjen black, carbon dots, carbon nanotubes, graphene, or carbon nanofibers.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold pressing to obtain the positive electrode plate.

### [Negative electrode plate]

The negative electrode plate includes a negative current collector and a negative film layer disposed on at least one surface of the negative current collector. The negative film layer includes a negative active material.

As an example, the negative current collector includes two surfaces opposite to each other in a thickness direction of the negative current collector. The negative film layer is disposed on either or both of the two opposite surfaces of the negative current collector.

In some embodiments, the negative current collector may be a metal foil or a composite current collector. For example, the metal foil may be a copper foil. The composite current collector may include a polymer material substrate and a metal layer formed on at least one surface of the polymer material substrate. The composite current collector may be formed by overlaying the polymer material substrate with a metal material (for example, copper, copper alloy, nickel, nickel alloy, titanium, titanium alloy, silver, and silver alloy). The polymer material substrate may be, for example, polypropylene (PP), polyethylene terephthalate (PET), polybutylene terephthalate (PBT), polystyrene (PS), or polyethylene (PE).

The negative active material may be a carbon-based negative active material and/or a silicon-based negative active material. As an example, the negative active material may include at least one of: artificial graphite, natural graphite, mesocarbon microbeads, soft carbon, hard carbon, a silicon-based material, or the like. The silicon-based material may be at least one selected from simple-substance silicon, a silicon-oxygen compound, a silicon-carbon composite, a silicon-nitrogen composite, and a silicon alloy. However, this application is not limited such materials. One of the negative active materials may be used alone, or at least two thereof may be used in combination.

In some embodiments, the negative film layer further optionally includes a binder. The binder may be at least one selected from styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), and carboxymethyl chitosan (CMCS).

In some embodiments, the negative film layer further optionally includes a conductive agent. The conductive agent may be at least one selected from superconductive carbon, acetylene black, carbon black, Ketjen black, carbon dots, carbon nanotubes, graphene, or carbon nanofibers.

In some embodiments, the negative film layer further optionally includes other agents, such as a thickener (for example, sodium carboxymethyl cellulose (CMC-Na)).

In some embodiments, the negative electrode plate may be prepared according to the following method: dispersing the ingredients of the negative electrode plate such as the negative active material, the conductive agent, the nitrate, the binder, and any other ingredients into a solvent (such as deionized water) to form a negative electrode slurry, coating a negative current collector with the negative electrode slurry, and performing steps such as drying and cold calendering to obtain the negative electrode plate.

### [Electrolyte solution]

The electrolyte solution serves to conduct ions between the positive electrode plate and the negative electrode plate. The type of the electrolyte solution is not particularly limited in this application, and may be selected as required. The electrolyte solution includes an electrolyte salt and a solvent.

In some embodiments, the electrolyte salt may be at least one selected from lithium hexafluorophosphate, lithium tetrafluoroborate, lithium perchlorate, lithium hexafluoroarsenate, lithium bisfluorosulfonimide, lithium bistrifluoromethanesulfonimide, lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent may be at least one selected from ethylene carbonate (EC), propylene carbonate, ethyl methyl carbonate, diethyl carbonate (DEC), dimethyl carbonate, dipropyl carbonate, methyl propyl carbonate, ethylene propyl carbonate, butylene carbonate, fluoroethylene carbonate, methyl formate, methyl acetate, ethyl acetate, propyl acetate, methyl propionate, ethyl propionate, propyl propionate, methyl butyrate, ethyl butyrate, 1,4-butyrolactone, sulfolane, methyl sulfonyl methane, ethyl methyl sulfone, and (ethylsulfonyl)ethane.

In some embodiments, the electrolyte solution further optionally includes an additive. For example, the additive may include a negative film-forming additive or a positive film-forming additive. The additive may further include an additive capable of improving specified performance of the battery, for example, an additive for improving overcharge performance of the battery, or an additive for improving high- or low-temperature performance of the battery. By using the additive, the solubility of the nitrate in the electrolyte solution can be adjusted to change the nitrate content in the electrolyte solution.

### [Separator]

In some embodiments, the secondary battery further includes a separator. The type of the separator is not particularly limited in this application, and may be any well-known porous separator that is highly stable both chemically and mechanically.

In some embodiments, the separator may be made of a material that is at least one selected from glass fiber, non-woven fabric, polyethylene, polypropylene, and polyvinylidene difluoride. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

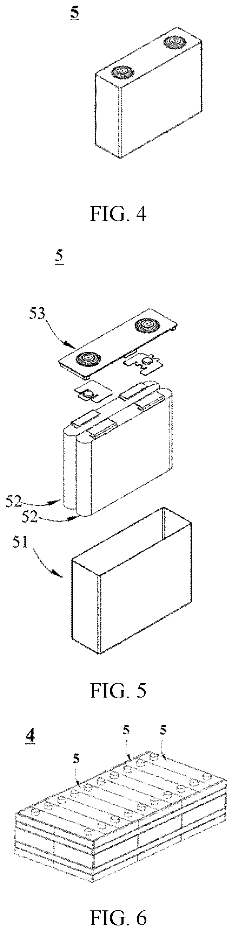

The shape of the secondary battery is not particularly limited in this application, and may be cylindrical, prismatic or any other shape. FIG. 4 shows a prismatic secondary battery 5 as an example.

In some embodiments, referring to FIG. 5, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is created on the housing 51. The cover plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in a secondary battery 5 may be one or more, and may be selected by a person skilled in the art as actually required.

In some embodiments, the secondary battery may be assembled into a battery module. The battery module may include one or more secondary batteries, and the specific number of secondary batteries in a battery module may be selected by a person skilled in the art depending on practical applications and capacity of the battery module.

FIG. 6 shows a battery module 4 as an example. Referring to FIG. 6, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

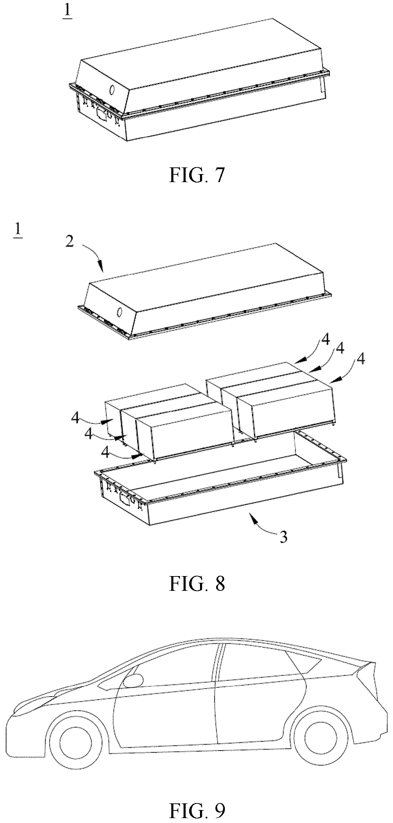

FIG. 7 and FIG. 8 show a battery pack 1 as an example. Referring to FIG. 7 and FIG. 8, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

Further, this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

FIG. 9 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

### Embodiments

The following describes some embodiments of this application. The embodiments described below are illustrative, and are merely intended to construe this application but not to limit this application. Unless techniques or conditions are expressly specified in an embodiment hereof, the techniques or conditions described in the literature in this field or in an instruction manual of the product are applicable in the embodiment. A reagent or instrument used herein without specifying a manufacturer is a conventional product that is commercially available in the market.

### Embodiment 1

Adding artificial graphite, magnesium nitrate, conductive carbon black, sodium carboxymethyl cellulose (CMC-Na), and polymer styrene-butadiene rubber (SBR) at a mass ratio of 96: 1: 1: 1: 1 into deionized water. Stirring well to form a uniform slurry. Coat a copper foil with the slurry, and drying the foil to obtain a negative electrode plate. The amount of the slurry applied to a single side of the foil is 0.15 g/1540.25 mm².

Adding LiNi_{0.8}Co_{0.1}Mn_{0.1}O₂ (NCM811), conductive carbon black, and a polyvinylidene difluoride (PVDF) binder at a mass ratio of 97: 1: 2 into N-methyl-pyrrolidone (NMP), and stirring well to form a uniform slurry. Coating an aluminum foil with the slurry, and drying the foil to obtain a positive electrode plate. The amount of the slurry applied to a single side of the foil is 0.28 g/1540.25 mm².

Mixing ethylene carbonate (EC) and diethyl carbonate (DEC) at a volume ratio of 1: 1, and then dissolving LiPF₆ in the forgoing solution evenly to obtain an electrolyte solution. In the electrolyte solution, the concentration of the LiPF₆ is 1 mol/L.

Using a polyethylene (PE) film as a separator.

Stacking the positive electrode plate, the separator, and the negative electrode plate sequentially in such a way that the separator is located between the positive electrode plate and the negative electrode plate. Injecting the electrolyte solution prepared above, and assembling the plates to form a stacked-type battery.

### Embodiment 2

Operation steps are the same as those in Embodiment 1 except that the dosage of the magnesium nitrate is increased to 2 wt% and the dosage of graphite is reduced to 95 wt% in a process of preparing the negative electrode.

### Embodiment 3

Operation steps are the same as those in Embodiment 1 except that the dosage of the magnesium nitrate is increased to 5 wt% and the dosage of graphite is reduced to 92 wt% in a process of preparing the negative electrode.

### Embodiment 4

Operation steps are the same as those in Embodiment 1 except that the dosage of the magnesium nitrate is increased to 4 wt% and the dosage of graphite is reduced to 93 wt% in a process of preparing the negative electrode.

### Embodiment 5

Operation steps are the same as those in Embodiment 1 except that the dosage of the magnesium nitrate is reduced to 0.7 wt% and the dosage of graphite is increased to 96.3 wt%.

### Embodiment 6

Operation steps are the same as those in Embodiment 1 except that the dosage of the magnesium nitrate is increased to 10 wt% and the dosage of graphite is reduced to 87 wt%.

### Embodiment 7

Operation steps are the same as those in Embodiment 1 except that the magnesium nitrate is replaced with copper nitrate.

### Embodiment 8

Operation steps are the same as those in Embodiment 1 except that the magnesium nitrate is replaced with zinc nitrate.

### Embodiment 9

Operation steps are the same as those in Embodiment 1 except that the magnesium nitrate is replaced with calcium nitrate.

### Embodiment 10

Operation steps are the same as those in Embodiment 1 except that the magnesium nitrate is replaced with aluminum nitrate.

### Embodiment 11

Operation steps are the same as those in Embodiment 1 except that the graphite is replaced with a silicon-based material, and the amount of the slurry applied to a single side of the negative electrode is reduced from 0.15 g/1540.25 mm² to 0.05 g/1540.25 mm².

### Embodiment 12

Operation steps are the same as those in Embodiment 1 except that the graphite is replaced with hard carbon, and the amount of the slurry applied to a single side of the negative electrode is reduced from 0.15 g/1540.25 mm² to 0.135 g/1540.25 mm².

### Embodiment 13

Operation steps are the same as those in Embodiment 1 except that the graphite is replaced with a mesocarbon microbeads, and the amount of the slurry applied to a single side of the negative electrode is reduced from 0.15 g/1540.25 mm² to 0.13 g/1540.25 mm².

### Comparative Embodiment 1

The preparation steps in Comparative Embodiment 1 are similar to those in Embodiment 1 except that the magnesium nitrate is not added to the negative electrode and the dosage of the graphite is increased to 97 wt%.

### Comparative Embodiment 2

The preparation steps in Comparative Embodiment 1 are similar to those in Embodiment 1 except that the magnesium nitrate is not added to the negative electrode, the dosage of the graphite is increased to 97 wt%, and 1.2 wt% magnesium nitrate is added to the electrolyte solution.

### Battery Test Method

### 1. Lithium plating morphology

Performing a 2C direct-current charging process. Specifically, charging a lithium-ion battery at a constant current of 2 C and at a temperature of 25 °C until the voltage reaches 4.25 V, and then charging the battery at a constant voltage of 4.25 V until the current drops to 0.05 C, and then discharging the battery at a constant current of 1 C until the voltage reaches 2.8 V, thereby completing one cycle. Repeating the cycle to cause lithium plating on the surface of the negative electrode. Charging and discharging a freshly prepared battery for 600 cycles, and charging and discharging another freshly prepared battery for 1500 cycles. Subsequently, disassembling the fully charged battery. Observing the morphology of lithium plating of the battery through a SEM image, and observing the appearance of the separator through a CCD. Grading the lithium plating morphology by visually observing the SEM image. "Flat" means that bulges are scarcely seen on the surface of the electrode plate; "slight bulge" means that visible moderate bulges exist on the surface of the electrode plate; "conspicuous bulge" means that conspicuous bulges exist on the surface of the electrode plate; and "lithium dendrite" means that lithium plating in the form of dendrites appears on the surface of the electrode plate.

FIG. 2 is a scanning electron microscope (SEM) image of a lithium plating region of a battery after cycling according to an embodiment and a comparative embodiment. In the drawing, part (a) is a scanning electron microscope (SEM) image of a lithium plating region of a battery prepared in Embodiment 10 (A), Embodiment 8 (B), and Embodiment 1 (C) separately after the battery is charged and discharged for 1500 cycles. The dashed line in the drawing represents a horizontal plane of the surface of the electrode plate. As can be seen from the drawing, conspicuous bulges exist on A, slight bulges exist on B, and C is flat and substantially includes no bulges. The morphology of all the three parts is approximately spherical, that is, without dendrites. In FIG. 2, part (b) is a scanning electron microscope (SEM) image of a lithium plating region of a battery prepared in Comparative Embodiment 1 (A) and Embodiment 1 (B) separately after the battery is charged and discharged for 600 cycles. The SEM image employs a relatively high magnification. As can be seen from the drawing, the lithium plating morphology in Embodiment 1 is spherical while the lithium plating morphology in Comparative Embodiment 1 is dendrites.

FIG. 3 is a close-up view of a separator observed with a CCD device at a corresponding position of a lithium plating region in Comparative Embodiment 1 (A) and Embodiment 1 (B) separately at the end of 600 cycles. As can be seen from the drawing, the separator in Comparative Embodiment 1 includes punctures caused by lithium plating while the separator in Embodiment 1 remains intact.

### 2. Mass percent of the nitrate in the negative film layer

The mass percent of the nitrate in the negative electrode is determined based on the corresponding metal content measured by using an inductively coupled plasma-optical emission spectrometer (ICP). A specific operation method is: Disassembling a prepared and chemically formed battery, cutting out a section of a specified area from a negative electrode plate of the battery to serve as a sample, and weighing the sample. Subsequently, digesting the sample with concentrated nitric acid, and then diluting the solution, and measuring the weight of metal in the diluted solution by use of the ICP. Calculating the mass percent of the nitrate in the negative film layer based on the measured weight of the metal and the weight of the negative film layer (the weight of the negative film layer is the weight of the weighed electrode plate minus the weight of the substrate).

### 3. Mass percent of the nitrate in the electrolyte solution

Measuring the concentration of the nitrate in the electrolyte solution by using the ICP. Disassembling a prepared and chemically formed battery, and diluting the electrolyte solution. Measuring the concentration of nitrate metal ions in the electrolyte solution by using the ICP, and then calculating the concentration of the nitrate.

### 4. Thickness of the SEI layer

The thickness of the SEI layer is determined by analyzing the morphology in an ion beam cross-section polishing SEM image of a sample polished by an argon ion polishing technology. Because the color of the negative film layer in the SEM image is obviously darker than the color of the SEI film, a boundary between the negative film layer and the SEI film can be determined based on the color difference, and the thickness of the SEI layer on the surface of the negative film layer can be determined.

**Table 1**

| | Negative active material | Nitrate | Dosag e of nitrate in dry weight of negati ve electro de slurry (wt%) | Mass percen t of nitrate in negati ve film layer (wt%) | Mass percent of nitrate in chemica lly formed electrol yte solution (wt%) | Lithium plating morpholo gy after 600 cycles (macro-morpholo gy) | Lithium plating morpholo gy after 600 cycles (micro-morpholo gy) | Status of separato r after 600 cycles | Thickn ess of SEI layer after 600 cycles (nm) | Lithium plating morpholog y after 1500 cycles (macro-morpholog y) | Lithium plating morpholo gy after 1500 cycles (micro-morpholo gy) | Status of separato r after 1500 cycles |
|---|---|---|---|---|---|---|---|---|---|---|---|---|
| Embodim ent 1 | Graphite | Magnesi um nitrate | 1 | 0.5 | 1.1 | No bulge | Spherica l | No punctur e | Appro x. 130 | No bulge | Spherica l | No punctur e |
| Embodim ent 2 | Graphite | Magnesi um nitrate | 2 | 1.5 | 1.2 | No bulge | Spherica l | No punctur e | - | No bulge | Spherica l | No punctur e |
| Embodim ent 3 | Graphite | Magnesi um nitrate | 5 | 4.5 | 1.2 | No bulge | Spherica l | No punctur e | Appro x. 230 | No bulge | Spherica l | No punctur e |
| Embodim ent 4 | Graphite | Magnesi um nitrate | 4 | 3.5 | 1.2 | No bulge | Spherica l | No punctur e | Appro x. 210 | No bulge | Spherica l | No punctur e |
| Embodim ent 5 | Graphite | Magnesi um nitrate | 0.7 | 0.2 | 1.1 | No bulge | Spherica l | No punctur e | - | No bulge | Spherica l | No punctur e |
| Embodim ent 6 | Graphite | Magnesi um nitrate | 10 | 9.5 | 1.2 | No bulge | Spherica l | No punctur e | Appro x. 320 | No bulge | Spherica l | No punctur e |
| Embodim ent 7 | Graphite | Copper nitrate | 1 | 0.3 | 1.7 | No bulge | Spherica l | No punctur e | - | Slight bulge | Spherica l | No punctur e |
| Embodim ent 8 | Graphite | Zinc nitrate | 1 | 0.4 | 1.4 | No bulge | Spherica l | No punctur e | - | Slight bulge | Spherica l | No punctur e |
| Embodim ent 9 | Graphite | Calcium nitrate | 1 | 0.5 | 1.1 | Slight bulge | Spherica l | No punctur e | - | Conspicu ous bulge | Spherica l + dendrite | No punctur e |
| | | | | | | | | | | | s | |
| Embodim ent 10 | Graphite | Aluminu m nitrate | 1 | 0.3 | 1.6 | Slight bulge | Spherica l | No punctur e | - | Conspicu ous bulge | Spherica l + dendrite s | No punctur e |
| Embodim ent 11 | Silicon-based material | Magnesi um nitrate | 1 | 0.3 | 1.6 | No bulge | Spherica l | No punctur e | - | No bulge | Spherica l | No punctur e |
| Embodim ent 12 | Hard carbon | Magnesi um nitrate | 1 | 0.6 | 1 | No bulge | Spherica l | No punctur e | - | No bulge | Spherica l | No punctur e |
| Embodim ent 13 | Mesocar bon microbea ds | Magnesi um nitrate | 1 | 0.5 | 1.2 | No bulge | Spherica l | No punctur e | - | No bulge | Spherica l | No punctur e |
| Comparat ive Embodim ent 1 | Graphite | / | / | / | / | Spikes | Dendrite s | Punctu res | Appro x. 90 | Dense spikes | Dendrite s | Punctu res |
| Comparat ive Embodim ent 2 | Graphite | Magnesi um nitrate | / | / | 1.2 | Slight bulge | Spherica l + dendrite s | No punctur e | - | Conspicu ous spikes | Dendrite s | Punctu res |

As can be seen from the above results, in Embodiments 1 to 13, because the nitrate is added to the negative film layer, no dendrites are formed after the battery undergoes 600 cycles, and the separator is not punctured even after 1500 cycles. In contrast, the battery in Comparative Embodiment 1 is doped with no nitrate at all, and therefore, dendrites that puncture the separator are formed after the battery undergoes 600 cycles. In Comparative Embodiment 2, the nitrate is added to the electrolyte solution alone. Although the separator is not punctured after the battery undergoes 600 cycles, dendrites that puncture the separator are formed after 1500 cycles.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A secondary battery, comprising a negative electrode plate, wherein the negative electrode plate comprises a negative current collector and a negative film layer disposed on at least one surface of the negative current collector, and the negative film layer contains a nitrate.

2. The secondary battery according to claim 1, wherein the nitrate is one or more selected from magnesium nitrate, copper nitrate, zinc nitrate, calcium nitrate, aluminum nitrate, silver nitrate, lithium nitrate, potassium nitrate, or sodium nitrate; optionally, the nitrate is one or more selected from magnesium nitrate, copper nitrate, zinc nitrate, calcium nitrate, or aluminum nitrate; and further optionally, the nitrate is one or more selected from magnesium nitrate, copper nitrate, or zinc nitrate; and still further optionally, the nitrate is magnesium nitrate.

3. The secondary battery according to claim 1 or 2, wherein, based on a total mass of the negative film layer, a mass percent of the nitrate in the negative film layer is 0.2 wt% or more, and optionally 0.2 wt% to 4.5 wt%, and further optionally 0.2 wt% to 1.5 wt%.

4. The secondary battery according to any one of claims 1 to 3, wherein the negative film layer comprises a negative active material, and the negative active material comprises at least one of a carbon-based negative active material or a silicon-based negative active material.

5. The secondary battery according to any one of claims 1 to 4, wherein the secondary battery comprises an electrolyte solution, the electrolyte solution also contains a nitrate, and optionally, based on a total mass of the electrolyte solution, a mass percent of the nitrate in the electrolyte solution is 0.1 wt% or more.

6. A method for preparing a secondary battery, comprising: preparing a negative electrode plate in the following step:
coating at least one surface of a negative current collector with a slurry containing a negative active material and a nitrate.

7. The method for preparing a secondary battery according to claim 6, wherein the nitrate is one or more selected from magnesium nitrate, copper nitrate, zinc nitrate, calcium nitrate, aluminum nitrate, silver nitrate, lithium nitrate, potassium nitrate, or sodium nitrate; optionally, the nitrate is one or more selected from magnesium nitrate, copper nitrate, zinc nitrate, calcium nitrate, or aluminum nitrate; and further optionally, the nitrate is one or more selected from magnesium nitrate, copper nitrate, or zinc nitrate; and still further optionally, the nitrate is magnesium nitrate.

8. The method for preparing a secondary battery according to claim 6 or 7, wherein a mass percent of the nitrate is 0.5 wt% or more, and optionally 0.5 wt% to 5 wt%, and further optionally 0.5 wt% to 2 wt%, based on a dry weight of the slurry.

9. The method for preparing a secondary battery according to any one of claims 6 to 8, wherein the negative active material comprises a carbon-based negative active material and/or a silicon-based negative active material.

10. An electrical device, wherein the electrical device comprises at least one of the secondary battery according to any one of claims 1 to 5 or a secondary battery prepared by the method for preparing a secondary battery according to any one of claims 6 to 9.
